# EUROPEAN PATENT APPLICATION

(11) **EP 4 734 497 A1**
(43) Date of publication of application: **29.04.2026**
(21) Application number: 25209332.3
(22) Date of filing: 17.10.2025
(51) Int. Cl.: H04N 1/00, G03G 15/00, G06F 1/3206, G06F 1/3234, G06F 3/12

(54) **IMAGE FORMING APPARATUS, INFORMATION PROCESSING APPARATUS, METHOD OF MANAGING IMAGE FORMING APPARATUS, IMAGE FORMING SYSTEM, AND PROGRAM**

(30) Priority: 22.10.2024 JP 2024186190
(71) Applicant: Canon Kabushiki Kaisha, Tokyo, 146-8501 (JP)
(72) Inventor: ONO, Hiroaki, Tokyo (JP)
(74) Representative: WESER & Kollegen Patentanwälte PartmbB

(57) **Abstract**

The present disclosure is directed to improving user-friendliness for configuring settings of an image forming apparatus. An image forming apparatus (100) notifies of a plurality of items with which settings of the image forming apparatus (100) are changeable (S601) and issues a warning in a case where the item related to a setting that changes power consumption is designated as a selection target among the plurality of items (S605).

## Description

### BACKGROUND

### Field of the Technology

The present disclosure relates to configuring of settings of an image forming apparatus.

### Description of the Related Art

As image forming apparatuses, there are printers, multi-function peripherals (MFPs), and the like, for example. Image forming apparatuses are sometimes connected to a network, such as the Internet. Japanese Patent Laid-Open No. 2016-213703 discloses an image forming system in which an image forming apparatus and a personal computer are connected through a network. In this image forming system, whether to prioritize the communication speed or to prioritize power saving may be set.

### SUMMARY

There has been a demand to improve user-friendliness for configuring settings.

The present disclosure in its first aspect provides an image forming apparatus as specified in claim 1.

Optional features are specified in claims 2 to 7.

The present disclosure in its second aspect provides information processing apparatus as specified in claim 8.

The present disclosure in its third aspect provides a method of managing an image forming apparatus as specified in claim 9.

The present disclosure in its fourth aspect provides an image forming system as specified in claim 10.

The present disclosure in its fifth aspect provides a program as specified in claim 11.

According to the present disclosure, it is possible to improve user-friendliness for configuring settings of an image forming apparatus.

Features of the present disclosure will become apparent from the following description of embodiments with reference to the attached drawings. The following description of embodiments are described by way of example.

### BRIEF DESCRIPTION OF THE DRAWINGS

Fig. 1 is a view illustrating an example of an exterior of an image forming apparatus.
Fig. 2 is a diagram illustrating an example of a configuration of an image forming system.
Fig. 3 is a diagram illustrating an example of a setting menu screen.
Fig. 4 is a diagram illustrating an example of a power saving setting screen.
Fig. 5 is a diagram illustrating an example of an additional information correspondence table.
Fig. 6 is a flowchart illustrating an example of processing executed by the image forming apparatus.
Fig. 7 is a diagram illustrating an example of a warning screen.
Fig. 8 is a diagram illustrating an example of an application screen.
Fig. 9 is a flowchart illustrating an example of processing executed by a host computer.
Fig. 10 is a flowchart illustrating an example of processing for stopping warning executed by the image forming apparatus.

### DESCRIPTION OF THE EMBODIMENTS

Hereinafter, with reference to the attached drawings, the present disclosure is explained in detail in accordance with preferred embodiments. Configurations shown in the following embodiments are merely exemplary and the present disclosure is not limited to the configurations shown schematically. Incidentally, an identical reference numeral is assigned to an identical constituent and an explanation thereof is made.

In this specification, the term "image formation" (also referred to as "printing") is not limited to formation of information with meaning, such as characters or a figure, and encompasses formation of information regardless of whether or not it contains meaning. Moreover, the term is not limited by whether what is to be formed is elicited to be visually perceptible to humans, and broadly represents formation of an image, a design, a pattern, or the like on a recording medium.

Also, a "recording medium" represents not only paper used for general image forming apparatuses but also a wide range of things that can receive inks, such as cloth, plastic films, sheet metal, glass, ceramic, wood, and leather. The following embodiments will be described on the assumption that the recording medium is recording paper, but the recording medium is not limited to recording paper, and other types of recording media are usable as mentioned above. Also, an "image forming apparatus" refers to an apparatus that forms images on the above-mentioned recording medium.

Further, the term "ink" (also referred to as "liquid") is to be widely interpreted as with the definition of "printing" mentioned above. Thus, the term represents a liquid to be used to form an image, a design, a pattern, or the like or process a recording medium by being applied to the recording medium, or to process the ink (e.g., solidification or insolubilization of a colorant in the ink to be applied to the recording medium).

### <First Embodiment>

In recent years, in order to reduce emissions of greenhouse gases, such as carbon dioxide, it has become necessary to reduce the amount of power consumption during use of image forming apparatuses. As one method to reduce the power consumption, it has become a general practice to equip image forming apparatuses with a power saving mode.

Equipping an image forming apparatus with a power saving mode increases the number of items that may be set on the image forming apparatus. In the case where the number of items that may be set on the image forming apparatus is increased, the user may not be able to know whether making a setting change will change the power consumption. For this reason, the power consumption may increase or decrease due to a setting change without the user being aware of it. In view of this, an example of improving user-friendliness for configuring settings of an image forming apparatus will be described below.

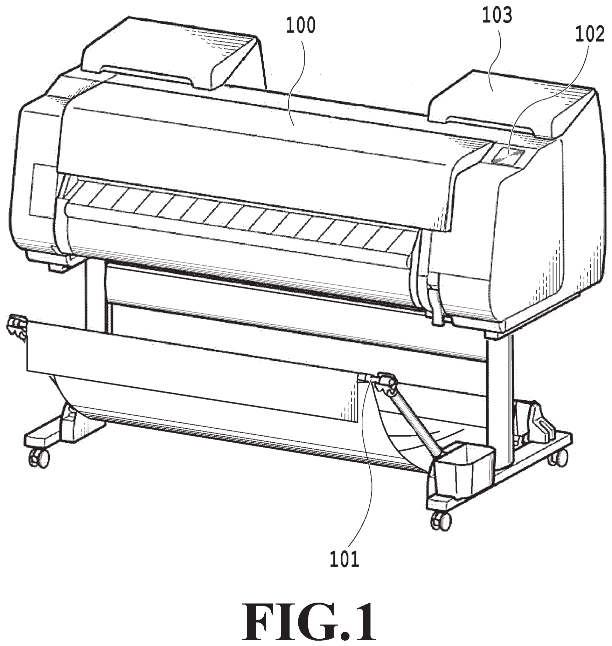

Fig. 1 is a view illustrating an example of an exterior of an image forming apparatus 100 in the present embodiment. Note that the image forming apparatus 100 will be described by taking an inkjet printer that uses inks as recording materials as an example, but is not limited to this. As the image forming apparatus 100, image forming apparatuses with various printing methods are employable. For example, the image forming apparatus 100 may be a thermal printer of a sublimation type, a thermal transfer type, or the like, a dot impact printer, a light emitting diode (LED) printer, or a laser printer.

The image forming apparatus 100 includes a paper discharge guide 101, a display-operation panel 102, and an ink tank unit 103. On the paper discharge guide 101, output pieces of recording paper are piled. The display-operation panel 102 accepts various setting operation for setting a recording mode, setting printing paper, and so on. The display-operation panel 102 displays various pieces of information such as recording information, setting results, and so on. The ink tank unit 103 has an accommodating unit capable of accommodating one or more ink tanks, such as black, cyan, magenta, and yellow ink tanks. The ink tank unit 103 supplies the inks inside the ink tanks accommodated in the accommodating unit to a recording head.

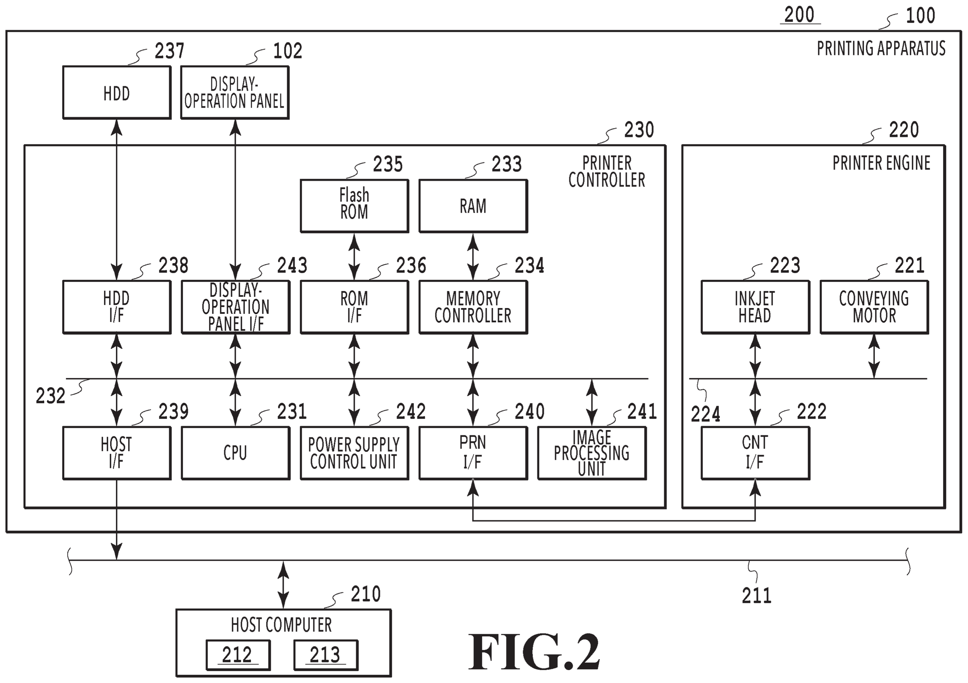

Fig. 2 is a diagram illustrating an example of a configuration of an image forming system 200 in the present embodiment. The image forming system 200 includes the image forming apparatus 100 and a host computer 210. The image forming apparatus 100 and the host computer 210 are connected through a network 211, such as the Internet or a local area network (LAN). The network 211 may be a wired network, a wireless network, or a combination of wired and wireless networks.

The image forming apparatus 100 has only a printing function but is not limited to this. For example, the image forming apparatus 100 may be a copying machine further including a reading device that reads images on a document. Alternatively, the image forming apparatus 100 may be an MFP. The image forming apparatus 100 has a printer engine 220 and a printer controller 230.

The host computer 210 is an external apparatus for the image forming apparatus 100. The host computer 210 is also a data providing apparatus capable of providing print data. Examples of the host computer 210 include a personal computer, a reader for reading images, a digital camera, and a smartphone. The host computer 210 may be a management apparatus (management server) that manages a plurality of image forming apparatuses. A printer driver for providing print data is installed on the host computer 210. The host computer 210 has an operation unit 212 into which to input various pieces of information and a display unit 213 which displays various pieces of information.

The printer engine 220 is an image forming unit which forms images. The printer engine 220 has a conveying motor 221, a controller interface (CNT I/F) 222, and an inkjet head 223. The conveying motor 221, the controller interface 222, and the inkjet head 223 are connected to one another through a system bus 224.

The conveying motor 221 is a motor which drives a conveying roller capable of conveying a sheet of roll paper or the like. The conveying motor 221 is controlled by the printer controller 230. The controller interface 222 is an interface for connecting the printer engine 220 to the printer controller 230. The inkjet head 223 is a printing unit which performs printing. The inkjet head 223 prints an image on a sheet based on image data. In one example, the inkjet head 223 holds a plurality of print heads corresponding to a plurality of colors, respectively. The inkjet head 223 ejects inks from the print heads in synchronization with the conveyance of the sheet to form an image on the sheet.

The printer controller 230 is a control unit which controls the printer engine 220. The printer controller 230 has a central processing unit (CPU) 231. The CPU 231 is connected to a system bus 232. The CPU 231 is a processor (calculation unit) which controls the operation of the image forming apparatus 100. The CPU 231 executes various processes by executing programs or activating hardware.

The printer controller 230 has a random-access memory (RAM) 233. The RAM 233 is connected to the system bus 232 through a memory controller 234. The RAM 233 is used as a work area for the CPU 231. The RAM 233 is used as an area to temporarily store data.

The printer controller 230 has a flash read-only memory (ROM) 235. The flash ROM 235 is connected to the system bus 232 through an ROM interface (ROM I/F) 236. The flash ROM 235 stores various pieces of data. For example, the flash ROM 235 stores programs to be executed by the CPU 231 or data that are needed for the operation of the image forming apparatus 100.

The printer controller 230 has a hard disk drive (HDD) 237. The HDD 237 is connected to the system bus 232 through an HDD interface (HDD I/F) 238. The HDD 237 is a non-volatile storage device. The HDD 237 stores various pieces of data (information), such as print data, setting data of the image forming apparatus 100, and programs to be executed by the CPU 231. A storage device other than the HDD 237 may be used instead of the HDD 237 or in addition to the HDD 237.

The printer controller 230 has a host interface (host I/F) 239 and a print interface (PRN I/F) 240. The host interface 239 and the print interface 240 are connected to the system bus 232. The host interface 239 is capable of exchanging various pieces of data with the host computer 210 through the network 211. The print interface 240 is connected to the controller interface 222 through a cable or the like and is capable of exchanging various pieces of data with the printer engine 220.

The printer controller 230 has an image processing unit 241. The image processing unit 241 is connected to the system bus 232. The image processing unit 241 is capable of executing various types of image processing. For example, the image processing unit 241 executes a process of rasterizing (converting) print data to be used by the image forming apparatus 100 (e.g., data represented in a page description language) into image data (bitmap image data). Also, for example, the image processing unit 241 executes a process of converting the color space of image data included in print data (e.g., YCbCr) into a standard RGB color space (e.g., sRGB). Also, for example, the image processing unit 241 executes processes such as resolution conversion, image analysis, and image correction on the image data. The image data obtained as a result of the image processing by the image processing unit 241 is stored in the flash ROM 235 or the HDD 237.

The printer controller 230 has a power supply control unit 242. The power supply control unit 242 is connected to the system bus 232. The power supply control unit 242 causes the image forming apparatus 100 to operate based on power supplied from a power supply device. The power supply control unit 242 is capable of switching a power mode so that the image forming apparatus 100 may operate in a predetermined power state. The power mode includes a normal power mode and a power saving mode. The power consumption of the image forming apparatus 100 specified for the power saving mode is lower than the power consumption of the image forming apparatus 100 specified for the normal power mode (standard power). The power supply control unit 242 adjusts (controls) the amount of power consumption during the operation of the image forming apparatus 100 by executing the normal power mode or the power saving mode. For example, in the normal power mode, the power supply control unit 242 supplies power to each of the printer engine 220 and the printer controller 230. In this normal power mode, the image forming apparatus 100 operates in a normal power state (standard power state). On the other hand, in the power saving mode, the power supply control unit 242 supplies power to the printer controller 230 and stops the power supply to the printer engine 220. In this power saving mode, the image forming apparatus 100 operates a power saving state. The present embodiment is based on a case with a single power saving mode, but there may be a plurality of power saving modes. For example, a plurality of power saving modes are set in ascending order of power saving efficiency (descending order of the amount of power consumption).

The printer controller 230 has the display-operation panel 102. The display-operation panel 102 is connected to the system bus 232 through a display-operation panel interface (display-operation panel I/F) 243. The display-operation panel 102 is an input-output device. The display-operation panel 102 includes operation units for the user to perform various operations, such as hardware keys, a touch panel, and a non-contact input panel, and a display unit which displays various pieces of information to the user (notifies the user of the various pieces of information). The display-operation panel 102 may notify the user of information by displaying an image of a screen or the like in the air. Alternatively, the display-operation panel 102 may notify the user of information by outputting a sound (such as a buzzer sound or speech) based on sound information from an audio generator.

Note that, in the present embodiment, the display-operation panel 102 is provided to the image forming apparatus 100 but is not limited to this. For example, the display-operation panel 102 may be provided outside the image forming apparatus 100 on the network 211. The display-operation panel 102 is provided outside the image forming apparatus 100 on the network 211, the display-operation panel 102 may be used as the operation unit 212 and the display unit 213 of the host computer 210. **In** this case, the operation unit 212 and the display unit 213 may be omitted. Also, an input-output device other than the display-operation panel 102 may be connected to the printer controller 230 through the network 211 or the like.

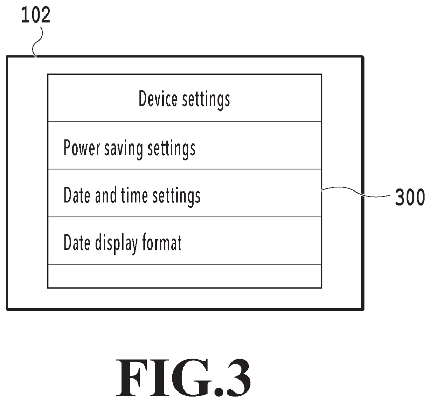

The display-operation panel 102 displays various screens in response to operations on the display-operation panel 102 by the user. Fig. 3 is a diagram illustrating an example of a setting menu screen 300. The setting menu screen 300 is a screen for settings of the image forming apparatus 100. The setting menu screen 300 is displayed on the display-operation panel 102 by the CPU 231. The setting menu screen 300 is provided with a title for the apparatus settings and a plurality of items with which settings of the image forming apparatus 100 may be changed (setting items). In the example of Fig. 3, an item "Power saving settings," an item "Date and time settings," and an item "Date display format." The user may designate any one of the plurality of items provided on the setting menu screen 300 as a selection target. For example, the user operates the display-operation panel 102 to press and designate one of the plurality of items provided on the setting menu screen 300.

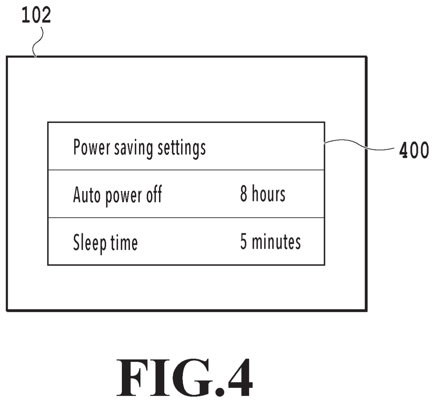

Fig. 4 is a diagram illustrating an example of a power saving setting screen 400. The power saving setting screen 400 can be switched from the setting menu screen 300. For example, in a case where the item "Power saving settings" on the setting menu screen 300 is designated as a selection target, the power saving setting screen 400 is displayed in place of the setting menu screen 300. The switching from the setting menu screen 300 to the power saving setting screen 400 is done by the CPU 231. The power saving setting screen 400 is a screen for increasing or decreasing the power consumption of the image forming apparatus 100. The power saving setting screen 400 displays types of settings related to power saving and currently set times. The user may change the currently set times. Each time may be changed by inputting any time or by selecting a time from among a plurality of preset choices.

In the example of Fig. 4, "Auto power off" is displayed to be "8 hours" and "Sleep timer" is displayed to be "5 minutes." In this case, the power supply control unit 242 automatically powers off the image forming apparatus 100 8 hours after the image forming apparatus 100 is powered on. Also, the power supply control unit 242 stops the normal power mode and executes the power saving mode in a case where the image forming apparatus 100 operating in the normal power state is left unused for 5 minutes.

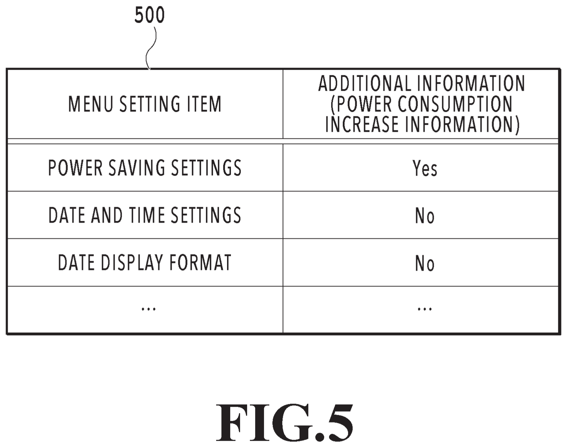

In the present embodiment, additional information is associated with each of the plurality of items on the setting menu screen 300. Fig. 5 is a diagram illustrating an example of an additional information correspondence table 500. The additional information correspondence table 500 is a table in which additional information is associated with the items in the setting menu (setting items). The additional information correspondence table 500 is stored as data in the flash ROM 235 or the HDD 237. The additional information includes information indicating whether there is a possibility of an increase in power consumption (power consumption increase information). In the example of Fig. 5, the power consumption increase information is presented as "Yes" or "No." In a case where the power consumption increase information is "Yes," it means that there is a possibility of an increase in power consumption by a change in the setting corresponding to the setting item. In a case where the power consumption increase information is "No," it means that there is no possibility of an increase in power consumption by a change in the setting corresponding to the setting item. The form in which the power consumption increase information is expressed is not particularly limited. For example, the power consumption increase information may be a flag.

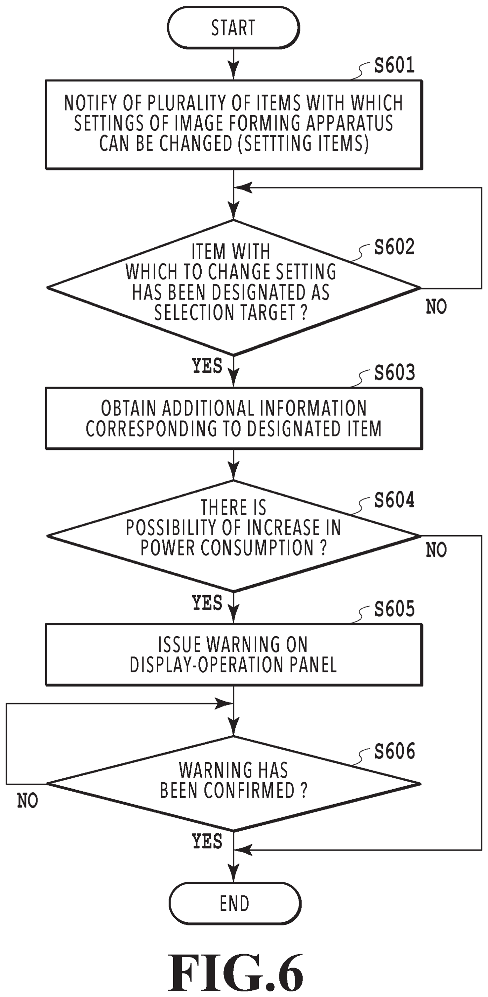

Fig. 6 is a flowchart illustrating an example of processing executed by the image forming apparatus 100. The CPU 231 implements the flowchart illustrated in Fig. 6 by reading out a program stored in the flash ROM 235, the HDD 237, or the like into the RAM 233 and executing it. Incidentally, the functions of some or all of the steps in Fig. 6 may be implemented with hardware such as an application-specific integrated circuit (ASIC) or an electronic circuit. The symbol "S" in the description of each process means a step in the flowchart (the same applies to the other flowcharts this specification).

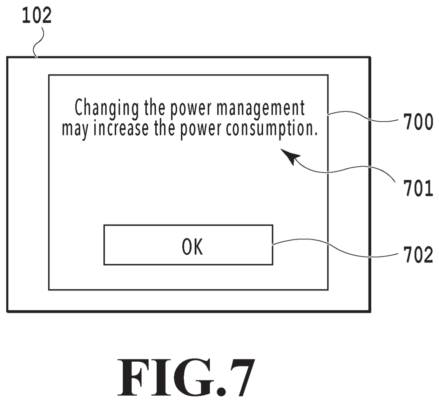

Fig. 7 is a diagram illustrating an example of a warning screen 700. A description will now be given below using Figs. 6 and 7. The processing in the flowchart illustrated in Fig. 6 is included as one method of managing the image forming apparatus 100. The processing in the flowchart illustrated in Fig. 6 is started in a case where an instruction to display the setting menu screen 300 illustrated in Fig. 3 is received from the display-operation panel 102.

In S601, the CPU 231 displays the setting menu screen 300 on the display-operation panel 102 to notify of the plurality of items with which settings of the image forming apparatus 100 may be changed (setting items). After notifying of the plurality of items, the CPU 231 proceeds to S602.

In S602, the CPU 231 determines whether one of the plurality of items provided on the setting menu screen 300 has been designated as a selection target. If determining that no item has been designated as a selection target, the CPU 231 does not proceed to S603. On the other hand, if determining that one item has been designated as a selection target, the CPU 231 proceeds to S603.

In S603, the CPU 231 refers to the additional information correspondence table 500 illustrated in Fig. 5 and obtains the additional information corresponding to the item designated as a selection target in S602. After obtaining the additional information, the CPU 231 proceeds to S604.

In S604, the CPU 231 determines based on the additional information whether there is a possibility of an increase in power consumption by a change in the setting corresponding to the item designated as a selection target in S602. In a case where the item designated as a selection target in S602 is an item such as "Date and time settings," the power consumption increase information included in the additional information illustrated in Fig. 5 is "No." In this case, the CPU 231 determines that there is no possibility of an increase in power consumption by a change in the setting corresponding to the item designated as a selection target in S602. If determining that there no possibility of an increase in power consumption, the CPU 231 does not proceed to S605 and terminates the processing in the flowchart illustrated in Fig. 6. On the other hand, in a case where the item designated as a selection target in S602 is the item "Power saving settings," the power consumption increase information included in the additional information illustrated in Fig. 5 is "Yes." In this case, the CPU 231 determines that there is a possibility of an increase in power consumption by a change in the setting corresponding to the item designated as a selection target in S602. If determining that there is a possibility of an increase in power consumption, the CPU 231 proceeds to S605.

In S605, the CPU 231 issues a warning by displaying the warning screen 700 illustrated in Fig. 7 on the display-operation panel 102. On the warning screen 700, a warning message 701 and a confirmation button 702 are displayed. In the example of Fig. 7, the content of the warning message 701 is "Changing the power management may increase the power consumption." but is not limited to this.

In the present embodiment, the CPU 231 displays the warning screen 700 before displaying the power saving setting screen 400 illustrated in Fig. 4. The warning with the warning screen 700 is issued regardless of whether a setting change is to be actually made on the subsequently displayed power saving setting screen 400. Specifically, even if a setting change that will lower the power consumption may be made on the power saving setting screen 400, the warning screen 700 indicating a possibility of an increase in power consumption is still displayed beforehand. To avoid misunderstandings and the like by the user, the content of the warning message 701 may be "Changing the power management may increase or decrease the power consumption" or the like. That is, the warning screen 700 may warn a possibility of a change in power consumption by a setting change. After issuing the warning, the CPU 231 proceeds to S606.

In S606, the CPU 231 determines whether the warning has been confirmed. Specifically, the CPU 231 determines whether an instruction indicating that the warning has been confirmed and accepted has been received from the user. In the example of Fig. 7, whether the warning has been confirmed and accepted is determined based on whether the confirmation button 702 has been pressed, but the determination method is not limited to this. In response to confirmation of the warning, the CPU 231 hides the warning screen 700 and then terminates the processing in the flowchart illustrated in Fig. 6.

After terminating the processing in the flowchart illustrated in Fig. 6, the CPU 231 executes processing for changing the setting corresponding to the item designated as a selection target in S602. For example, in a case where the item designated as a selection target in S602 is the item "Power saving settings," the CPU 231 displays the power saving setting screen 400 in place of the setting menu screen 300. In a case where the user changes the currently set times on the power saving setting screen 400, the CPU 231 sends the changed contents to the power supply control unit 242.

Note that, in a case where the warning is not confirmed and accepted in S606, the CPU 231 may terminate the process in the flowchart of Fig. 6 and return to the setting menu screen 300. In this case, the CPU 231 does not execute the processing for changing the setting corresponding to the item designated as a selection target in S602. Here, the case where the warning is not confirmed and accepted refers, for example, to a case where the confirmation button 702 is pressed for a certain period of time or a case where a separate button for indicating the intention not to make a change and that button is pressed.

As described above, according to the present embodiment, user-friendliness for configuring settings of the image forming apparatus 100 is improved. The image forming apparatus 100 issues a warning, for example, in a case where an item related to a setting that changes the power consumption is designated as a selection target. In this way, in a case of changing the setting of the image forming apparatus 100, the user can intuitively recognize that the setting change will change the power consumption. This improves user-friendliness for configuring settings of the image forming apparatus 100.

### <Second Embodiment>

In the first embodiment, a case of changing a setting of the image forming apparatus 100 from the image forming apparatus 100 has been described as an example. In the present embodiment, a case of changing a setting of the image forming apparatus 100 from the host computer 210 will be described as an example.

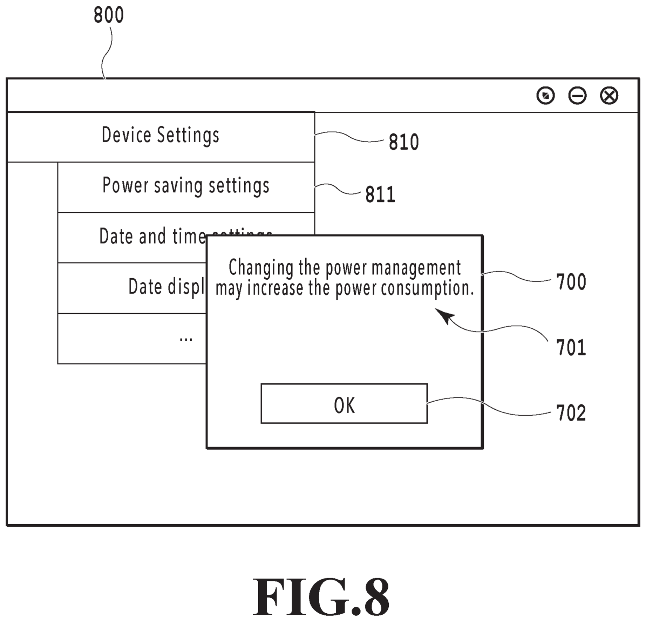

Fig. 8 is a diagram illustrating an example of an application screen 800. The application screen 800 is displayed on the display unit 213 in a case where an application stored in the host computer 210 is launched. The application screen 800 is provided with a title bar 810 and a setting item screen 811. In the example of Fig. 8, the title bar 810 is disposed directly under the menu bar of the application screen 800 with a title "Device settings," but is not limited to this. The setting item screen 811 is provided with a plurality of items with which settings of the image forming apparatus 100 may be changed. In the example of Fig. 8, an item "Power saving settings," an item "Date and time settings," and an item "Date display format." The user may designate any one of the plurality of items provided on the setting item screen 811 as a selection target. For example, the user operates the operation unit 212 to press and designate one of the plurality of items provided on the setting item screen 811.

In a case where the item "Power saving settings" is designated, the host computer 210 displays the warning screen 700 within the application screen 800. This is because there is a possibility of an increase (change) in power consumption. Note that the warning screen 700 is not displayed in a case where an item not related to a setting that increases (changes) the power consumption, such as "Date and time settings," is designated.

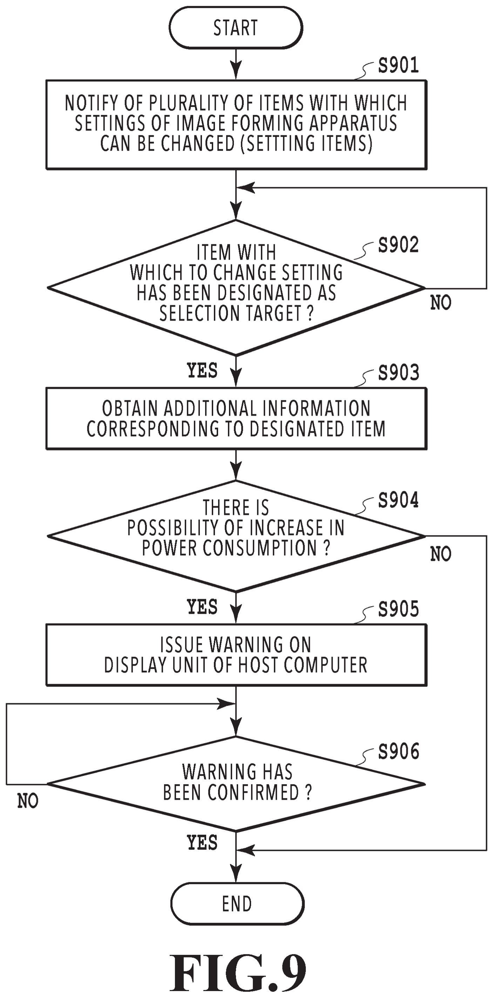

Fig. 9 is a flowchart illustrating an example of processing executed by the host computer 210. The CPU of the host computer 210 implements the flowchart illustrated in Fig. 9 by reading out a program stored in a storage device into the RAM of the host computer 210 and executing it. Note that the storage device may be incorporated in the host computer 210 or the flash ROM 235 or the HDD 237 of the image forming apparatus 100.

The processing in the flowchart illustrated in Fig. 9 is included as one method of managing the image forming apparatus 100. The processing in the flowchart illustrated in Fig. 9 is started in a case where an instruction to display the application screen 800 is received from the operation unit 212.

In S901, the CPU of the host computer 210 notifies of a plurality of items with which settings of the image forming apparatus 100 may be changed (setting items) through the setting item screen 811 in the application screen 800. After notifying of the plurality of items, the CPU of the host computer 210 proceeds to S902.

In S902, the CPU of the host computer 210 determines whether one of the plurality of items provided on the setting item screen 811 has been designated as a selection target. If determining that no item has been designated as a selection target, the CPU of the host computer 210 does not proceed to S903. On the other hand, if determining that one item has been designated as a selection target, the CPU of the host computer 210 proceeds to S903.

In S903, the CPU of the host computer 210 refers to the additional information correspondence table 500 and obtains the additional information corresponding to the item designated as a selection target in S902. In the present embodiment, the additional information correspondence table 500 is stored in a memory incorporated in the host computer 210, but may be loaded into the RAM of the host computer 210 from the flash ROM 235 or the HDD 237 of the image forming apparatus 100. After obtaining the additional information, the CPU of the host computer 210 proceeds to S904.

In S904, the CPU of the host computer 210 determines based on the additional information whether there is a possibility of an increase (change) in power consumption by a change in the setting of the item designated as a selection target in S902. If determining that there no possibility of an increase (change) in power consumption, the CPU of the host computer 210 does not proceed to S905 and terminates the processing in the flowchart illustrated in Fig. 9. On the other hand, if determining that there is a possibility of an increase (change) in power consumption, the CPU of the host computer 210 proceeds to S905.

**In** S905, the CPU of the host computer 210 issues a warning by displaying the warning screen 700 on the display unit 213. The warning with the warning screen 700 is issued regardless of whether a setting change is to be actually made on the subsequently displayed power saving setting screen 400. After issuing the warning, the CPU of the host computer 210 proceeds to S906.

**In** S906, the CPU of the host computer 210 determines whether the warning has been confirmed. Specifically, the CPU of the host computer 210 determines whether an instruction indicating that the content of the warning has been confirmed or accepted has been received from the user. In response to confirmation of the warning, the CPU of the host computer 210 hides the warning screen 700 and then terminates the processing in the flowchart illustrated in Fig. 9.

Note that, after terminating the processing in the flowchart illustrated in Fig. 9, the CPU of the host computer 210 executes processing for changing the setting corresponding to the item designated as a selection target in S902. For example, in a case where the item designated as a selection target in S902 is the item "Power saving settings," the CPU of the host computer 210 displays the power saving setting screen 400 illustrated in Fig. 4 in place of the setting item screen 811 illustrated in Fig. 8. In a case where the user changes the currently set times on the power saving setting screen 400, the CPU of the host computer 210 sends the changed contents to the power supply control unit 242 through the network 211.

As described above, according to the present embodiment, user-friendliness for configuring settings of the image forming apparatus 100 from the host computer 210 is improved. The host computer 210 issues a warning, for example, in a case where an item related to a setting that changes the power consumption is designated as a selection target. In this way, in a case of changing the setting of the image forming apparatus 100, the user can intuitively recognize that the setting change will change the power consumption. This improves user-friendliness for configuring settings of the image forming apparatus.

### <Third Embodiment>

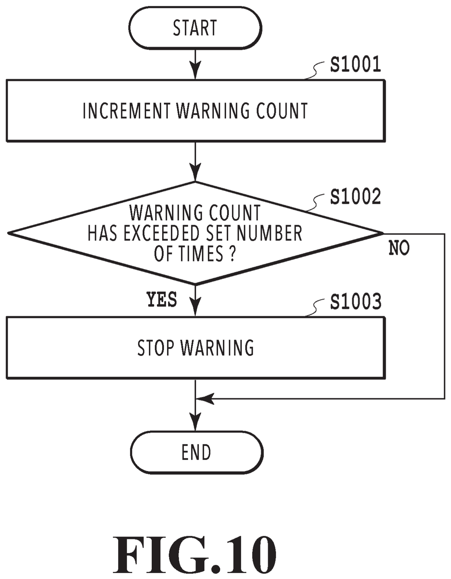

In the present embodiment, stopping of the warning screen 700 will be described. Fig. 10 is a flowchart illustrating an example of processing for stopping warning executed by the image forming apparatus 100. The processing in the flowchart illustrated in Fig. 10 is started, for example, in a case where the warning screen 700 is displayed.

In S1001, the CPU 231 increments the warning count. The warning count is changed to zero, for example, in a case where the image forming apparatus 100 is initialized. After incrementing the warning count, the CPU 231 proceeds to S1002.

In S1002, the CPU 231 compares a predetermined number of times set in advance and the warning count incremented in S1001. The predetermined number of times may be any number of times set by the user or a number of times set as a fixed value.

If the warning count is the predetermined number of times or less, the CPU 231 does not proceed to S1003 and terminates the processing in the flowchart illustrated in Fig. 10. On the other hand, if the warning count is more than the predetermined number of times, the CPU 231 proceeds to S1003.

In S1003, the CPU 231 stops issuing the warning subsequently. Specifically, even if the confirmation button 702 on the warning screen 700 displayed at the time of starting the processing in the flowchart illustrated in Fig. 10 is not pressed, the CPU 231 hides that warning screen 700. Also, the CPU 231 will not display the warning screen 700 in the next or subsequent occasion even if an item related to a setting that changes the power consumption is designated as a selection target.

As described above, according to the present embodiment, the CPU 231 stops issuing a warning after the warning count exceeds a predetermined number of times. This can eliminate the annoyance of receiving the warning at a time by which the warning is likely to have been widely recognized.

Note that the processing in the flowchart illustrated in Fig. 10 is processing executed by the CPU 231 of the image forming apparatus 100 but may be processing executed by the CPU of the host computer 210. Also, instead of the processing in the flowchart illustrated in Fig. 10, the warning may be stopped manually. In one example, the warning screen 700 is provided with a message "Do not show this screen again." or the like and a checkbox. In a case where the user checks the checkbox, the warning screen 700 will no longer be displayed.

### <Other Embodiments>

A configuration combining the first embodiment and the second embodiment described above may be employed. In this way, in a case of changing a setting of the image forming apparatus 100 from the image forming apparatus 100 or from the host computer 210, a warning can be issued if the setting change will increase or decrease the power consumption.

In the first embodiment described above, an example in which the warning screen 700 is displayed on the display-operation panel 102 of the image forming apparatus 100 in response to an operation on the display-operation panel 102 of the image forming apparatus 100 has been described, but the display is not limited to this. For example, the warning screen 700 may be displayed on the display unit 213 of the host computer 210 in response to an operation on the display-operation panel 102 of the image forming apparatus 100. Alternatively, the warning screen 700 may be displayed on both the display-operation panel 102 of the image forming apparatus 100 and the display unit 213 of the host computer 210 in response to an operation on the display-operation panel 102 of the image forming apparatus 100.

In the first embodiment and second embodiment described above, a plurality of items which can be set for the image forming apparatus 100 are displayed to be notified of, but the notification is not limited to this. For example, a plurality of items which can be set for the image forming apparatus 100 may be notified of by means of voice. Alternatively, a plurality of items which can be set for the image forming apparatus 100 may be notified of by means of both text and voice.

In the first embodiment and second embodiment described above, a warning is given by notifying of the warning message 701, which is text, but the warning is not limited to this. For example, a warning may be issued by notifying of the warning message by means of voice. Alternatively, a warning may be issued by notifying of the warning message by means of both text and voice. Still alternatively, a warning may be issued by turning on or flashing a warning lamp.

In the first embodiment and second embodiment described above, no warning level is set, but a warning level may be set. The larger the range of change in power consumption that is tolerated for configuring a setting corresponding to an item (setting item), the higher the warning level is set. For example, in the additional information illustrated in Fig. 5, information indicating the degree of the warning level, such as "high" and "low," is specified. In this example, the range within which the power consumption changes as a result of configuring a setting corresponding to an item associated with the warning level "high" is greater than the range within which the power consumption changes as a result of configuring a setting corresponding to an item associated with the warning level "low." Also, the size of the warning screen that is displayed in response to designation of an item associated with the warning level "high" as a selection target is larger than the size of the warning screen that is displayed in response to designation of an item associated with the warning level "low" as a selection target. In this way, the user can intuitively recognize the range of power consumption with the warning level.

In the first embodiment and second embodiment described above, the processing in the flowchart illustrated in Fig. 6 is executed by the image forming apparatus 100, but the execution is not limited to this. For example, the processing in the flowchart illustrated in Fig. 6 may be executed by a mobile terminal such as a mobile phone or a tablet or an information processing apparatus such as a stationary personal computer.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An image forming apparatus (100) comprising:
a notification unit (231) configured to notify of a plurality of items with which settings of the image forming apparatus are changeable; and
a warning unit (231) configured to issue a warning in a case where the item related to a setting that changes power consumption is designated as a selection target among the plurality of items.

2. The image forming apparatus according to claim 1, wherein a determination unit configured to make a determination on whether an item designated as a selection target is the item related to the setting that changes the power consumption.

3. The image forming apparatus according to claim 2, wherein the determination unit makes the determination based on information associated with the item, the information indicating whether there is a possibility of an increase in the power consumption.

4. The image forming apparatus according to any one of claims 1 to 3, wherein the notification unit notifies of the plurality of items by displaying the plurality of items.

5. The image forming apparatus according to any one of claims 1 to 4, wherein the warning unit stops issuing the warning once a warning count exceeds a predetermined number of times.

6. The image forming apparatus according to any one of claims 1 to 5, wherein the warning unit displays the warning on a display unit included in the image forming apparatus.

7. The image forming apparatus according to any one of claims 1 to 6, wherein the warning unit displays the warning on a display unit included in a host computer connected to the image forming apparatus.

8. An information processing apparatus comprising:
a notification unit configured to notify of a plurality of items with which settings of the information processing apparatus are changeable; and
a warning unit configured to issue a warning in a case where the item related to a setting that changes power consumption is designated as a selection target among the plurality of items.

9. A method of managing an image forming apparatus, the method comprising the steps of:
notifying of a plurality of items with which settings of the image forming apparatus are changeable; and
issuing a warning in a case where the item related to a setting that changes power consumption is designated as a selection target among the plurality of items.

10. An image forming system in which an image forming apparatus and a host computer are connected through a network, wherein
at least one of the image forming apparatus and the host computer comprises:
a notification unit configured to notify of a plurality of items with which settings of the image forming apparatus are changeable; and
a warning unit configured to issue a warning in a case where the item related to a setting that changes power consumption is designated as a selection target among the plurality of items.

11. A program that causes a computer to function as:
a notification unit configured to notify of a plurality of items with which settings of an image forming apparatus are changeable; and
a warning unit configured to issue a warning in a case where the item related to a setting that changes power consumption is designated as a selection target among the plurality of items.
